(19)

Europäisches
Patentamt
European
Patent Office
Office européen
des brevets

(11) **EP 2 355 427 A1**

(12) **EUROPEAN PATENT APPLICATION**

(43) Date of publication:
**10.08.2011 Bulletin 2011/32**

(51) Int Cl.:
*H04L 25/02* [(2006.01)]     *H04L 27/26* [(2006.01)]

(21) Application number: **09179283.8**

(22) Date of filing: **15.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **NXP B.V.**
**5656 AG Eindhoven (NL)**

(72) Inventors:
• **van Houtum, Wim**
**Redhill, Surrey RH1 1DL (GB)**

• **Siemons, Jasper**
**Redhill, Surrey RH1 1DL (GB)**
• **Boomstra, Marko**
**Redhill, Surrey RH1 1DL (GB)**

(74) Representative: **Williamson, Paul Lewis et al**
**NXP Semiconductors**
**Intellectual Property Department**
**Betchworth House**
**57-65 Station Road**
**Redhill**
**Surrey RH1 1DL (GB)**

(54) **Digital Communications Receiver**

(57)     A method for a digital communications receiver. The method comprises receiving a signal transmitted from a transmitter. The transmitted signal includes a first modulated carrier representing one or more data bits and a second modulated carrier optionally representing one or more padding bits only. The padding bits are inserted at the transmitter and have predefined values known to both the transmitter and receiver. The method further comprises determining whether the one or more padding bits were inserted at the transmitter; if so, analysing the second modulated carrier in the received signal, using knowledge of the predetermined values of the one or more padding bits; and, using information determined from the analysis, estimating the values of the one or more data bits from the first modulated carrier.

FIG 3

EP 2 355 427 A1

## Description

This invention relates to a digital communications receiver. In particular, it relates to a receiver for receiving transmissions that conform - at least at the physical layer - to the Digital Audio Broadcasting (DAB) standard, as defined in European Telecommunication Standard ETS 300401. As will be well known to those skilled in the art, the DAB physical layer definition is shared by several related digital communications systems, including Digital Multimedia Broadcasting (DMB) and DAB+. The present invention applies equally to all such systems (among others).

The DAB system according to ETS 300401 defines two mechanisms for transporting data: the Fast Information Channel (FIC); and the Main Services Channel (MSC).

The MSC carries audio- and data-service components. The MSC is a time-interleaved data channel, divided into a number of sub-channels, each of which is individually convolutionally coded. Each sub-channel may carry one or more service components. The organization of the sub-channels and service components is called the multiplex configuration.

The FIC carries control information which signals the configuration of the MSC to the receiver. A key part of this control information is the Multiplex Configuration Information (MCI). This specifies the multiplex structure of the MSC. The FIC is comprised of Fast Information Blocks (FIBs) of 256 bits. The FIC is transmitted without time interleaving, but is subject to convolutional encoding before transmission to provide a high level of protection against transmission errors.

The MSC is made up of a sequence of Common Interleaved Frames (CIFs). A CIF is a data field of 55296 bits and one is transmitted every 24 ms, which makes the coded data-rate of the broadcast system 2.304 Mbit/s. The smallest addressable unit of the CIF is the Capacity Unit (CU), which has a size of 64 bits. Within each CIF, integral numbers of CUs are grouped together to constitute the basic transport units of the MSC, called sub-channels. Thus, the MSC is a multiplex of sub-channels. There are 864 CUs in each CIF. The MSC is convolutionally encoded and time interleaved. (Note that the CIF size of 55296 bits and the CU size of 64 bits refer to the data bits after convolutional coding has been applied.

For transmission, the FIC and MSC are combined with a synchronization channel in a Transmission Frame (TF). The synchronization channel consists of the first two symbols of the TF: the null symbol; and the phase reference symbol. The start of the null symbol defines the time reference. The phase reference symbol provides the reference for the differential modulation of the subsequent OFDM symbols. The format of the remainder of the transmission frame depends on the choice of one of four transmission modes. However, it always includes a group of FIC symbols, representing at least 3 FIBs, followed by a group of MSC symbols, representing at least one CIF.

DAB uses Orthogonal Frequency Division Multiplexing (OFDM). Each OFDM symbol consists of a set of equally spaced carriers. Each carrier is modulated using Differential Encoding Quadrature Phase Shift Keying (DE-QPSK). The number of carriers; carrier spacing; number of symbols in each TF; and symbol duration vary dependent on the transmission mode, as defined in ETS 300401. By way of example, the following details relate to transmission mode I. 1536 OFDM carriers are used; there are 76 symbols (excluding the null symbol) in each TF, comprising 12 FIBs and 4 CIFs; the TF duration is 96ms; and the symbol duration is ~1.246ms. There are 3072 bits per OFDM symbol.

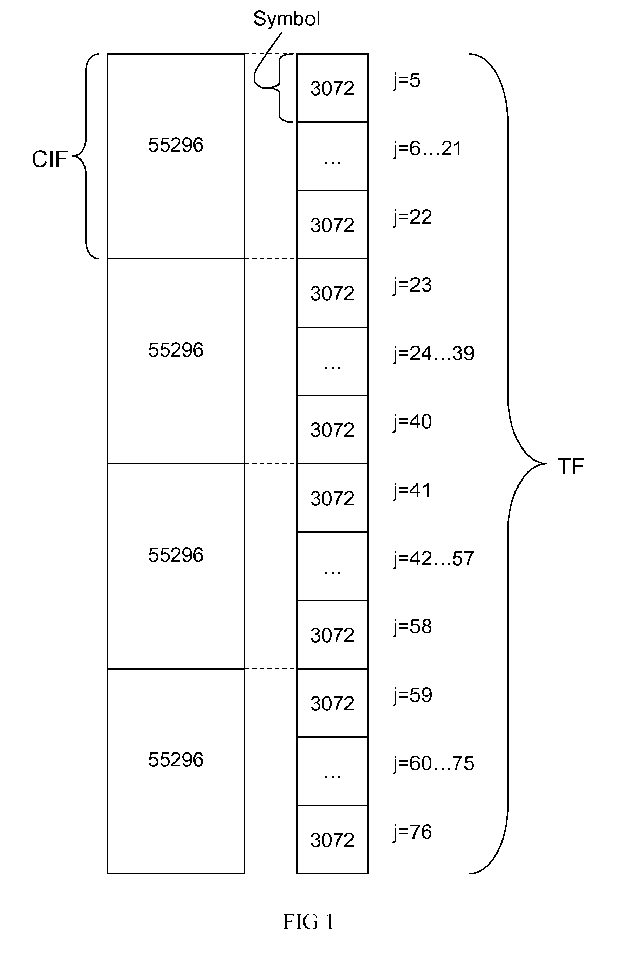

The convolutional encoding of the FIC results in a code rate of approximately 1/3, such that 3 symbols are used to transmit the 12 encoded FIBs. This leaves 72 symbols for the MSC. Here, 48 CUs, each of 64 bits, are transmitted in each symbol. That is, 18 symbols are used to transmit each CIF. The mapping of the four CIFs to OFDM symbols is shown in Fig. 1. In this diagram, the index "j" is the number of the OFDM symbol. Symbols j=0...4, which are the synchronisation and FIC symbols, are not shown.

The 12 FIBs contributing to one transmission frame are divided into four groups, each of which is assigned to one of the CIFs contributing to the transmission frame. The information contained in the first three FIBs refers to the first CIF, the information contained in the fourth, fifth and sixth FIB to the second CIF, and so on.

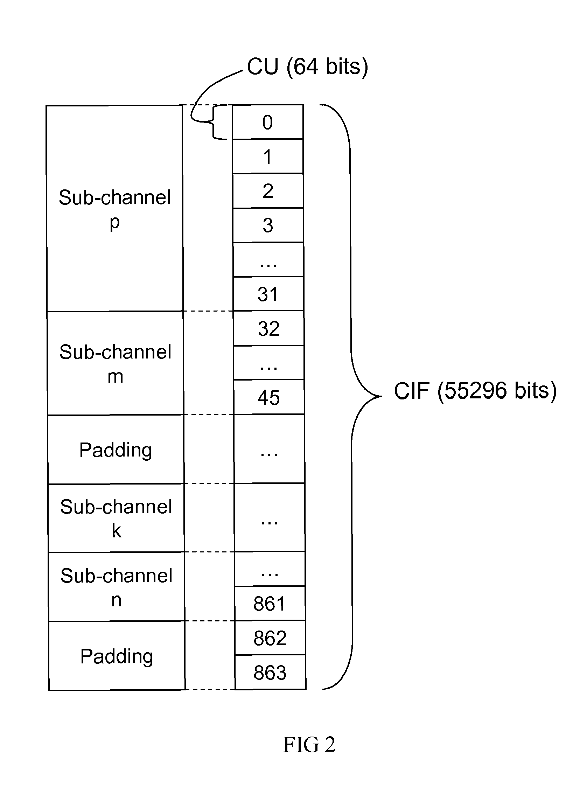

The usage of the total coded data-rate of 2.304 Mbps depends on the number of coded video, audio and data services assigned to it - that is, the "DAB ensemble". If the number of the coded services of the DAB ensemble does not fill the 864 CUs within the CIF-structure, then "Padding CUs" will be introduced, to occupy the spare capacity. As the name suggests, these "Padding CUs" are simply used to fill the number of bits per CIF up to the fixed coded data-rate of 2.304 Mbit/s. Fig. 2 shows an example of the structure of a CIF containing four sub-channels and two groups of padding CUs. This shows the mapping of sub-channels (shown on the left) to integer numbers of CUs (shown on the right).

The values of the bits within the "Padding CUs" are defined in the ETS 300401 standard, by reference to a Pseudo-Random Binary Sequence (PRBS). If the (i+1) th bit of the CIF belongs to a CU containing padding bits, it shall take the value of the (i+1)th bit of the PRBS defined by the following PRBS-generator:

$$P(X) = X^9 + X^5 + 1$$

This is a polynomial of degree 9 and can be implemented using a feedback shift-register. The initialization word (all ones) is applied in such a way that the first bit of the PRBS is obtained when the outputs of all shift register stages are set to the value "1". The first 16 bits of the resulting PRBS are {0, 0, 0, 0, 0, 1, 1, 1, 1, 0, 1, 1, 1, 1, 1, 0}.

A pseudo-random sequence is used because it ensures good energy dispersal. This avoids the occurrence of bit patterns which might result in undesirable regularity in the transmitted signal.

The selection of the specific CUs to be filled with padding bits is not specified by the standard. That is, the transmitter has discretion to choose the positions of any padding CUs within the CIF. The MCI of the FIC will signal to the receiver which CUs contain data sub-channels and which CUs are padding.

According to an aspect of the present invention, there is provided a method for a digital communications receiver, comprising: receiving a signal transmitted from a transmitter, the transmitted signal including a first modulated carrier representing one or more data bits and a second modulated carrier optionally representing one or more padding bits only, the padding bits being inserted at the transmitter and having predefined values known to both the transmitter and receiver; determining whether the one or more padding bits were inserted at the transmitter; if so, analysing the second modulated carrier in the received signal, using knowledge of the predetermined values of the one or more padding bits; and, using information determined from the analysis, estimating the values of the one or more data bits from the first modulated carrier.

According to this method, the padding bits (when present) are used as a pilot signal, to help demodulate and/or decode the data bits. This is possible because the values of the padding bits are predefined and known to the receiver. Therefore, once the receiver determines that the padding bits have been transmitted, it can also uniquely determine how the second carrier would have been modulated at the transmitter to transmit these bits. By analysing the second carrier in the received signal, the receiver can then discover useful information, such as the delay or distortion introduced in transmission. For example, the expected signal can be compared with that actually received. This information can be used to improve the reliability of reception of the data bits.

The first and second carriers can be anything which can be modulated to carry information. By way of example, the first and second carriers may comprise signals at different frequencies, or they may comprise signals of the same frequency, at different time instants.

The padding bits are typically inserted at the transmitter when the volume of data to be transmitted is less than the full capacity of the signal. The second modulated carrier represents the (one or more) padding bits only, which means that the modulation of this carrier does not depend on any of the data bits. Similarly, at the receiver, the analysis of the second modulated carrier is independent of the values of the data bits.

The method exploits padding bits in the transmitted signal that are otherwise redundant. The present inventors have recognised that when known padding bits are present and can be demodulated independently of any (unknown) data bits, the padding bits comprise a useful source of channel state information. This is especially true for time-varying channels because padding bits may be inserted more frequently than traditional pilot signals or synchronisation symbols. By using the padding bits, the state of the channel can be tracked at a finer resolution. This can make communication more reliable. Rapidly varying channels are typical, for example, where at least one of the transmitter and receiver is moving during communication.

The information determined from the analysis preferably includes at least one of: a phase of a carrier in the signal; a frequency of a carrier in the signal; and a timing of a symbol transmitted by the signal.

In this way, the predictable modulation of the second carrier by the padding bits can be used to improve the synchronisation or lock on the transmitted signal.

The information determined from the analysis may include an estimate of distortion introduced by a physical channel through which the signal was transmitted.

The estimate of distortion may comprise a channel transfer-function. Such information can be used, for example, for equalisation and/or soft-decision decoding of the received signal.

The transmitted signal may also comprise header bits, and the method may further comprise decoding the header bits, wherein the decoded header bits are used to determine that the plurality of padding bits was inserted at the transmitter.

It is advantageous to have an indication of whether padding bits have been inserted by the transmitter. Otherwise, for example, it may be necessary to search exhaustively for a known pattern of padding. By definition, the padding bits will not always be present, and their number will vary.

The method may further comprise using the decoded header bits to identify the second modulated carrier.

Here, the header provides the receiver with enough detail about the structure of the bit stream to determine which parts of the signal represent data and which parts represent padding bits. This information can be used to identify the carrier carrying the one or more padding bits.

The signal may be an Orthogonal Frequency Division Multiplexed signal comprising a plurality of carriers spaced in frequency.

Here, again, the first and second modulated carriers may be two OFDM carriers at different frequencies, or they may comprise the same OFDM carrier in different symbol periods.

The values of the padding bits are preferably predetermined according to a known pseudo-random sequence.

An uncorrelated sequence of this kind may be beneficial for taking channel measurements.

The transmitter may comprise a Digital Audio Broadcasting or Digital Multimedia Broadcasting transmitter; and the plurality of padding bits may comprise one or more Padding Capacity Units of a Common Interleaved Frame.

The method is particularly advantageous in the context of DAB. Capacity Units containing padding bits (when present) are interspersed with data CUs in the CIF. These padding bits are apparently redundant stuffing; however, according to this method, they become a valuable resource for channel state estimation. Because the padding CUs are independent of the contents of the data CUs, they result in a subset of the OFDM carriers exhibiting a predictable pattern, just like a pilot signal. According to the DAB standard, the null symbol and phase reference symbol are the only pilot symbols. However, these are transmitted only once per frame. This may be insufficient for estimation of quickly varying channels, such as mobile channels. If even a single padding CU is present, a set of predictable carriers will occur up to four times more often than these two symbols (because up to four CIFs are contained in each TF). If several padding CUs are present, even more regular monitoring of the channel becomes possible.

The transmitter may comprise a Digital Audio Broadcasting or Digital Multimedia Broadcasting transmitter; the plurality of padding bits may comprise one or more Padding Capacity Units of a Common Interleaved Frame; and the header bits may comprise Multiplex Configuration Information of the Fast Information Channel.

Decoding the relevant parts of the MCI tells the receiver which CUs are padding bits. It can therefore identify the relevant OFDM symbols within the TF and also the carriers within those symbols which correspond to the padding bits.

Also provided is a computer program comprising computer program code means adapted to perform all the steps of the methods described above when said program is run on a computer; and such a computer program embodied on a computer readable medium.

According to a another aspect of the invention, there is provided a digital communications receiver, adapted to: receive a signal transmitted from a transmitter, the transmitted signal including a first modulated carrier representing one or more data bits and a second modulated carrier optionally representing one or more padding bits only, the padding bits being inserted at the transmitter and having predefined values known to both the transmitter and receiver; determine whether the one or more padding bits were inserted at the transmitter; if so, analyse the second modulated carrier in the received signal, using knowledge of the predetermined values of the one or more padding bits; and, using information determined from the analysis, estimate the values of the one or more data bits from the first modulated carrier.

The receiver preferably comprises a Digital Audio Broadcasting or Digital Multimedia Broadcasting receiver; and the plurality of padding bits comprises one or more Padding Capacity Units of a Common Interleaved Frame.

The receiver is preferably adapted to determine whether the one or more padding bits were inserted, by decoding the Multiplex Configuration Information of the Fast Information Channel.

According to still another aspect of the invention, there is provided a digital communications receiver for receiving a transmitted signal conforming to the physical layer definition of the Digital Audio Broadcasting standard, the signal comprising a Transmission Frame having a Main Service Channel which includes at least one Common Interleaved Frame, the receiver adapted to: determine whether the Common Interleaved Frame includes a Capacity Unit containing padding bits of predetermined value; if so, use the predetermined values of the padding bits to determine the modulation of a carrier that was used to transmit the Capacity unit; and use the known modulation of that carrier to assist in the demodulation and/or decoding of the signal.

The receiver is preferably adapted to use the known modulation to recover at least one of: a phase of a carrier in the signal; a frequency a carrier in the signal; and a timing of an OFDM symbol transmitted by the signal.

The receiver is preferably adapted to use the known modulation of the carrier to estimate distortion introduced by a physical channel through which the signal was transmitted.

The invention will now be described by way of example with reference to the accompanying drawings, in which:

> Fig. 1 shows the mapping of OFDM symbols to the four CIFs in a TF according to transmission mode I;
> Fig. 2 shows an example of a CIF structure including two groups of padding CUs;
> Fig. 3 is a flow chart illustrating a method according to an embodiment of the invention; and
> Fig. 4 is a block diagram showing a DAB transmitter and a DAB receiver according to an embodiment of the invention.

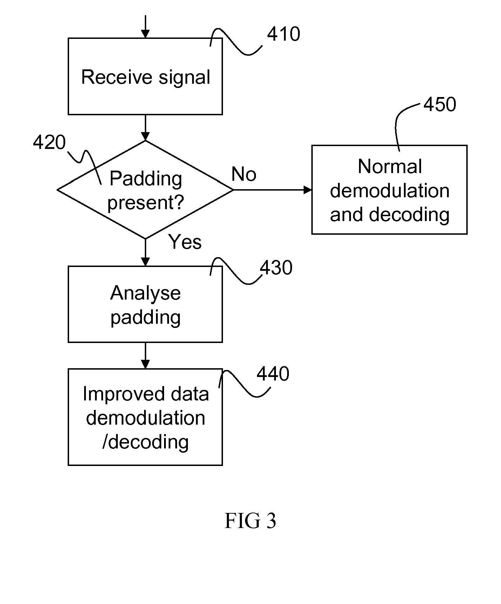

A method for a digital communications receiver according to an embodiment of the invention is illustrated in Fig. 3. The method comprises receiving 410 a signal transmitted from a transmitter. The transmitted signal includes a first modulated carrier representing one or more data bits and a second modulated carrier optionally representing one or more padding bits only. The padding bits are inserted at the transmitter to fill the capacity of the communications system, when this is not fully used by data. The padding bits have standardised values that are known to both the transmitter and receiver. The receiver first determines 420 whether the one or more padding bits were inserted at the transmitter. If they were, the receiver analyses 430 the second modulated carrier (corresponding to the padding bits) in the signal it has received. This analysis is based on the receiver's knowledge of the fixed values of the padding bits. Based on the analysis of the carrier corresponding to the known padding bits, the receiver can improve 440 the demodulation and/or decoding of the carriers containing the data bits.

If it is determined that padding bits were not inserted at the transmitter, the receiver instead proceeds with normal demodulation and decoding 450.

In some embodiments, the analysis of the second carrier (modulated by the padding bits) is used to improve synchronization, such as timing-control and frequency-control. This could involve determining a phase, frequency or symbol timing from the padding carrier. Of course, if multiple carriers representing padding bits are available, this information can be extracted for each carrier, or a combined estimate produced.

In other embodiments, the carriers containing padding bits are used as a pilot signal for channel estimation or equalisation.

Better synchronisation and/or channel estimation allows the receiver to improve the demodulation and decoding of the other carriers (carrying the data bits).

In a preferred embodiment, the receiver is based on the physical layer of the DAB standard, ETS 300401. (This may be one of a number of types of receiver, including, but not limited to DAB+ receivers and DMB receivers). Here, the first and second carriers are carriers in the OFDM signal. The data bits are in the CUs containing the sub-channels of the DAB ensemble. These are modulated, using differential QPSK, on a first set of OFDM carriers. The padding bits are grouped together as padding CUs of 64 bits. These will be modulated on a second set of carriers in the OFDM spectrum. According to the embodiment, these second carriers are used as pilots, to improve the reception of the data on the first carriers. Note that the first and second set of carriers may be different carriers within a single OFDM symbol, or they may correspond to different OFDM symbols. In other words, using the padding-modulated carriers as pilots can assist in the reception of different carriers in the same OFDM symbol, or the same or different carriers in nearby OFDM symbols.

In known DAB receivers, only the null symbol and phase reference symbol can be used as pilot signals. This means that the channel (including delay and transfer function) can only be estimated once per transmission frame. If the channel transfer function is quickly varying, this may not be enough for consistent reception throughout the TF.

The location of the padding bits, and therefore the identity of the carriers representing them, can be determined by decoding the MCI in the FIC. It is usually possible to decode the FIC, because the corresponding symbols are transmitted immediately after the null and phase reference symbols. Therefore, the channel estimate based on these symbols is highly likely to remain valid for the FIC symbols.

The values of all the padding bits are normatively defined in the DAB standard, so there is no uncertainty about how the second set of carriers was modulated at the transmitter. Details of the generation of the pseudo-random binary sequence have already been summarised above.

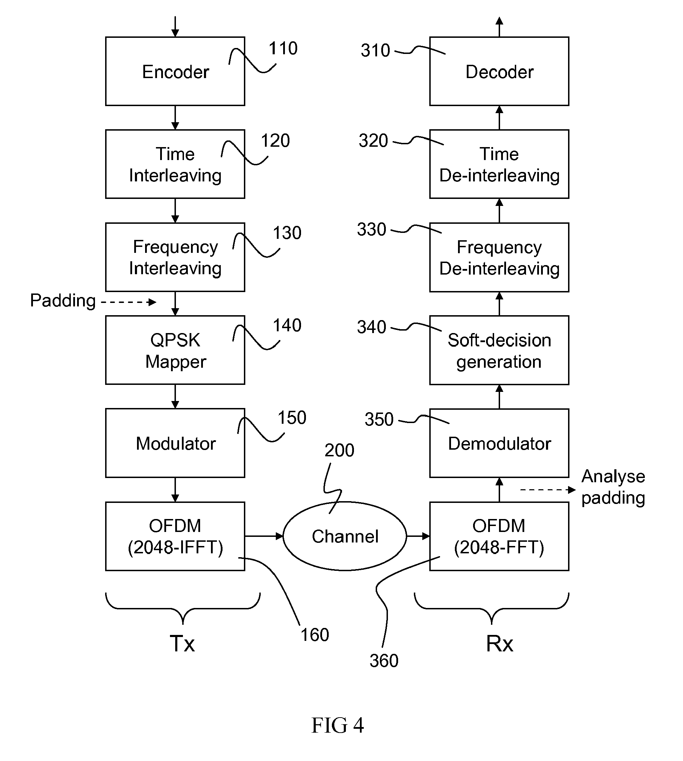

Fig. 4 shows a transmitter Tx and a receiver Rx operating according to an embodiment. In this example, the transmitter Tx is a known DAB transmitter. The block diagram shows the processing pipeline for the data bits of the MSC. The FIC is processed separately, in the conventional manner.

At the transmitter, the data is encoded using a convolutional encoder 110 using CC(4,1,7) and puncturing. The encoded bits are subjected to bit-reversal time interleaving 120 and block frequency interleaving 130. After the frequency interleaver 130, padding bits are inserted by the transmitter, to fill the entire CIF. Then, the bits are mapped to symbols in the QPSK constellation. The QPSK mapper 140 maps each pair of bits to one QPSK symbol using Gray encoding. These symbols are passed to the modulator 150, which is a pi/4 differential QPSK encoder. Each of the DE-QPSK symbols output by the modulator 150 modulates an OFDM carrier. As is common for OFDM transmitters, the signal is constructed in the frequency domain and an Inverse Fast Fourier Transform (IFFT) is applied to convert to the time domain signal.

The signal is transmitted over a channel 200, which in this example is assumed to be linear with Additive White Gaussian Noise (AWGN).

At the receiver Rx, an FFT is performed, to convert the sampled, received signal into the frequency domain again. This is output to the demodulator 350, which in this example is a two symbol differential decoder that performs demodulation of the differential modulation code by multiplication of the current OFDM symbol with the complex conjugate of the previous OFDM symbol.

In this embodiment, the linear soft-metric generator 340 makes soft decisions about the content of the demodulated bit pairs, using linear quantization. The time de-interleaver 320 and frequency de-interleaver 330 perform the inverse operations to the time interleaver 120 and frequency interleaver 130, respectively. In this embodiment, the outer decoder 310 is a de-puncturing Viterbi decoder which yields estimates of the information bits by estimating with the well-known Viterbi Maximum-Likelihood Sequence Estimation (MLSE) algorithm. All of the above functional blocks may be similar to known DAB receivers.

According to the present embodiment, the receiver Rx uses the MCI from the decoded FIC to discover that padding bits are present in the received signal. The FIC decoding can be performed in a conventional way. The MCI also enables the receiver to determine where, in the time-frequency matrix of the OFDM signal, to find the modulated carriers corresponding to the padding.

The identified carriers in the relevant OFDM symbols are then analysed. As shown by the dashed line of Fig. 4, this analysis is conveniently performed in the frequency domain, directly after the FFT 360.

Preferably, the analysis includes estimating a transfer function of the channel 200, which can then be used for equalisation of the remainder of the carriers (data carriers) in the same OFDM symbol, or for equalisation of nearby OFDM symbols.

Detailed implementation of the components of a DAB transmitter and receiver will be well within the capabilities of those skilled in the art, having reference to the standard, ETS 300401. These details have been omitted from the above description, for clarity and brevity. As will also be apparent to those skilled in the art, some or all of the components of a DAB radio may be software-defined. That is, they may be implemented in reconfigurable or general-purpose hardware adapted (by software programming) to perform the transmitter or receiver functions.

While the invention has been illustrated and described in detail in the drawings and foregoing description, such illustration and description are to be considered illustrative or exemplary and not restrictive; the invention is not limited to the disclosed embodiments.

All of the blocks of Fig. 4 are common physical layer blocks (that is, similar blocks may be found in the transmitters and receivers of other communications systems). However, the sub-channel partitioning structure - that is, the time-multiplexing of services - is specific to the DAB family of standards (including DAB, DAB+ and T-DMB). This time-multiplexing of services makes enables per-service processing at the receiver. This can reduce the receiver complexity considerably, compared to other communications systems, because it is not necessary to process the complete DAB-ensemble if only a single service is required.

Variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A method for a digital communications receiver, comprising:

   receiving a signal transmitted from a transmitter, the transmitted signal including a first modulated carrier representing one or more data bits and a second modulated carrier optionally representing one or more padding bits only, the padding bits being inserted at the transmitter and having predefined values known to both the transmitter and receiver;
   determining whether the one or more padding bits were inserted at the transmitter;
   if so, analysing the second modulated carrier in the received signal, using knowledge of the predetermined values of the one or more padding bits; and,
   using information determined from the analysis, estimating the values of the one or more data bits from the first modulated carrier.

2. The method of claim 1, wherein the information determined from the analysis includes at least one of:

   a phase of a carrier in the signal;
   a frequency of a carrier in the signal; and
   a timing of a symbol transmitted by the signal.

3. The method of claim 1 or claim 2, wherein the information determined from the analysis includes an estimate of distortion introduced by a physical channel through which the signal was transmitted.

4. The method of any of claims 1 to 3, wherein the transmitted signal also comprises header bits,
   the method further comprising decoding the header bits, and
   wherein the decoded header bits are used to determine that the plurality of padding bits was inserted at the transmitter.

5. The method of claim 4, further comprising using the decoded header bits to identify the second modulated carrier.

6. The method of any preceding claim, wherein the signal is an Orthogonal Frequency Division Multiplexed signal comprising a plurality of carriers spaced in frequency.

7. The method of any preceding claim, wherein the values of the padding bits are predetermined according to a known pseudo-random sequence.

8. The method of any preceding claim, wherein:

the transmitter comprises a Digital Audio Broadcasting or Digital Multimedia Broadcasting transmitter; and

the plurality of padding bits comprises one or more Padding Capacity Units of a Common Interleaved Frame.

9. The method of claim 4 or claim 5, wherein:

the transmitter comprises a Digital Audio Broadcasting or Digital Multimedia Broadcasting transmitter;

the plurality of padding bits comprises one or more Padding Capacity Units of a Common Interleaved Frame; and

the header bits comprise Multiplex Configuration Information of the Fast Information Channel.

10. A computer program comprising computer program code means adapted to perform all the steps of any preceding claim when said program is run on a computer.

11. A computer program as claimed in claim 10 embodied on a computer readable medium.

12. A digital communications receiver, adapted to:

receive a signal transmitted from a transmitter, the transmitted signal including a first modulated carrier representing one or more data bits and a second modulated carrier optionally representing one or more padding bits only, the padding bits being inserted at the transmitter and having predefined values known to both the transmitter and receiver;

determine whether the one or more padding bits were inserted at the transmitter;

if so, analyse the second modulated carrier in the received signal, using knowledge of the predetermined values of the one or more padding bits; and,

using information determined from the analysis, estimate the values of the one or more data bits from the first modulated carrier.

13. The receiver of claim 12, wherein:

the receiver comprises a Digital Audio Broadcasting or Digital Multimedia Broadcasting receiver; and

the plurality of padding bits comprises one or more Padding Capacity Units of a Common Interleaved Frame.

14. The receiver of claim 13, wherein the receiver is adapted to determine whether the one or more padding bits were inserted by decoding the Multiplex Configuration Information of the Fast Information Channel.

FIG 1

CU (64 bits)

| Sub-channel p | | 0 |
|---|---|---|
| | | 1 |
| | | 2 |
| | | 3 |
| | | ... |
| | | 31 |
| Sub-channel m | | 32 |
| | | ... |
| | | 45 |
| Padding | | ... |
| Sub-channel k | | ... |
| Sub-channel n | | ... |
| | | 861 |
| Padding | | 862 |
| | | 863 |

CIF (55296 bits)

FIG 2

410

Receive signal

450

420

Padding
present?

No

Normal
demodulation
and decoding

Yes

430

Analyse
padding

440

Improved data
demodulation
/decoding

FIG 3

FIG 4

Europäisches
Patentamt

European
Patent Office

Office européen
des brevets

**EUROPEAN SEARCH REPORT**

Application Number

EP 09 17 9283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 027 464 B1 (NAKAHARA HIDEKI [JP] ET AL) 11 April 2006 (2006-04-11)<br>* column 1, line 35 - line 40 *<br>* column 2, line 5 - line 38 *<br>* column 9, line 3 - line 43 *<br>* column 10, line 25 - line 35 *<br>* column 10, line 59 - column 12, line 16 *<br>* column 13, line 5 - column 14, line 25 * | 1-14 | INV.<br>H04L25/02<br>H04L27/26 |
| X | DIETER VAN WELDEN ET AL: "Frequency-Domain Data-Aided Channel Estimation for KSP-OFDM"<br>SPREAD SPECTRUM TECHNIQUES AND APPLICATIONS, 2008. ISSSTA '08. IEEE 10TH INTERNATIONAL SYMPOSIUM ON, IEEE, PISCATAWAY, NJ, USA,<br>25 August 2008 (2008-08-25), pages 613-617, XP031319085<br>ISBN: 978-1-4244-2203-6<br>* the whole document * | 1-14 | |
| | | | TECHNICAL FIELDS SEARCHED (IPC) |
| X | JI-HYUN KIM ET AL: "Detection of Hierarchically-Modulated Data for Advanced T-DMB Receivers"<br>IEEE TRANSACTIONS ON CONSUMER ELECTRONICS, IEEE SERVICE CENTER, NEW YORK, NY, US,<br>vol. 54, no. 1,<br>1 February 2008 (2008-02-01), pages 39-46, XP011205758<br>ISSN: 0098-3063<br>* the whole document * | 1,12 | H04L |

-/--

The present search report has been drawn up for all claims

| Place of search | Date of completion of the search | Examiner |
|---|---|---|
| Munich | 22 April 2010 | Vaquero, Raquel |

Europäisches
Patentamt
European
Patent Office
Office européen
des brevets

## EUROPEAN SEARCH REPORT

Application Number

EP 09 17 9283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/268671 A1 (COON JUSTIN [GB]) 30 November 2006 (2006-11-30) * paragraphs [0009], [0014] * * paragraphs [0033], [0041] * * paragraph [0055] - paragraph [0056] * * paragraph [0065] - paragraph [0068] * ----- | 1,12 | |
| A | US 6 078 592 A (SPIERO RICHARD C [NL]) 20 June 2000 (2000-06-20) * column 4, line 6 - column 6, line 50 * * column 7, line 14 - line 19 * * column 8, line 45 - line 60 * ----- | 9,10 | |
| A | "Radio Broadcasting Systems; Digital Audio Broadcasting (DAB) to mobile, portable and fixed receivers European Broadcasting Union Union Européenne de Radio-Télévision EBUÜER; Final draft ETSI EN 300 401" ETSI STANDARDS, LIS, SOPHIA ANTIPOLIS CEDEX, FRANCE, vol. BC, no. V1.4.1, 1 January 2006 (2006-01-01), XP014032143 ISSN: 0000-0001 * page 24 - page 35 * * page 144 - page 149 * ----- | 9,10 | TECHNICAL FIELDS SEARCHED (IPC) |

The present search report has been drawn up for all claims

| Place of search | Date of completion of the search | Examiner |
|---|---|---|
| Munich | 22 April 2010 | Vaquero, Raquel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 9283

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2010

| Patent document cited in search report | | Publication date | Patent family member(s) | | Publication date |
|---|---|---|---|---|---|
| US 7027464 | B1 | 11-04-2006 | US 2006104195 A1 | | 18-05-2006 |
| US 2006268671 | A1 | 30-11-2006 | GB 2424805 A | | 04-10-2006 |
| | | | JP 2006287931 A | | 19-10-2006 |
| US 6078592 | A | 20-06-2000 | CA 2206627 A1 | | 10-04-1997 |
| | | | CN 1168205 A | | 17-12-1997 |
| | | | DE 69634659 D1 | | 02-06-2005 |
| | | | DE 69634659 T2 | | 02-03-2006 |
| | | | ES 2242197 T3 | | 01-11-2005 |
| | | | WO 9713339 A1 | | 10-04-1997 |
| | | | JP 11502390 T | | 23-02-1999 |
| | | | JP 4014224 B2 | | 28-11-2007 |

EPO FORM P0459

For more details about this annex : see Official Journal of the European Patent Office, No. 12/82